# EUROPEAN PATENT APPLICATION

(11) **EP 3 584 618 A1**
(43) Date of publication of application: **25.12.2019**
(21) Application number: 18839512.3
(22) Date of filing: 01.02.2018
(51) Int. Cl.: G02B 6/44, G02B 6/38

(54) **OPTICAL CABLE CONNECTION APPARATUS**

(71) Applicant: Huawei Technologies Co. Ltd., Shenzhen, Guangdong 518129 (CN)
(72) Inventor: YU, Jianxiong, Shenzhen, Guangdong 518129 (CN); XIONG, Wei, Shenzhen, Guangdong 518129 (CN); ZHANG, Yan, Shenzhen, Guangdong 518129 (CN); ZHANG, Zhiyong, Shenzhen, Guangdong 518129 (CN)
(74) Representative: Gill Jennings & Every LLP
(86) International application number: PCT/CN2018/074981
(87) International publication number: WO 2019/148432

(57) **Abstract**

Embodiments of the present disclosure belong to the field of fiber optic communications technologies and disclose an optical cable connection device. The optical cable connection device includes an optical cable box and an optical cable connection box. At least one first cable port through which a feeder cable can pass and at least one second cable port through which a drop cable can pass are provided on the optical cable box. A first cable terminal and a second cable terminal are provided on the optical cable connection box. The optical cable connection box is fastened and installed in the optical cable box in a detachable manner. The first cable terminal is configured to connect the feeder cable. The second cable terminal is configured to connect the drop cable. According to the present disclosure, a skilled person does not need to build a handhole when installing the optical cable connection box. After the optical cable connection box is installed in the optical cable box, the optical cable box can be directly buried underground. The optical cable box can protect the optical cable connection box. Therefore, an engineering period for installing the optical cable connection box is relatively short.

## Description

### TECHNICAL FIELD

This application relates to the field of fiber optic communications technologies, and in particular, to an optical cable connection device.

### BACKGROUND

Standing out from optical communications, fiber optic communications technologies have become one of major pillars for modern communications, and play a significant part in a modern telecommunications network.

An optical cable is a communications cable used to transmit an optical signal, and includes one or more optical fibers. In a sparsely populated area, an optical cable is connected to a residential area from an optical line terminal (optical line terminal, OLT) in an operator equipment room usually in a buried manner. An optical cable connection box used to connect a drop cable is installed at a cable end located in the residential area. The optical cable connection box is usually disposed in a handhole. The handhole is a working pit with an inner wall built by using bricks and cement and a cover disposed on the top. The handhole is used to protect the optical cable connection box (if the optical cable connection box is directly buried underground, the optical cable connection box may be damaged during digging when the optical cable connection box needs to be connected or commissioned).

A related technology has at least the following disadvantage:
When installing an optical cable connection box in a residential area, a skilled person needs to first build a handhole, and then put the optical cable connection box in the handhole after the handhole is completed. However, construction of the handhole is relatively complex. A pit needs to be dug first. Then, on an inner wall of the pit, bricks need to be paved, cement needs to be applied, and the like. As a result, an engineering period for installing the optical cable connection box is relatively long.

### SUMMARY

To resolve problems in related technologies, embodiments of the present disclosure provides an optical cable connection device. Technical solutions are as follows.

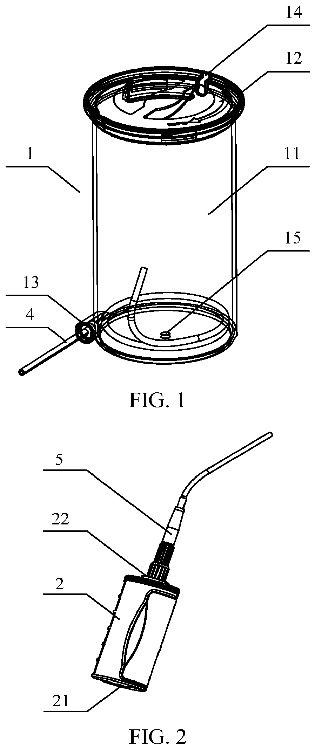

According to an embodiment of the present disclosure, an optical cable connection device is provided. As shown in FIG. 1, with reference to FIG. 2, the optical cable connection device includes an optical cable box 1 and an optical cable connection box 2. At least one first cable port 13 through which a feeder cable 4 can pass and at least one second cable port 14 through which a drop cable 5 can pass are provided on the optical cable box 1. A first cable terminal 21 and a second cable terminal 22 are provided on the optical cable connection box 2. The optical cable connection box 2 is fastened and installed in the optical cable box 1 in a detachable manner. The first cable terminal 21 is configured to connect the feeder cable 4, or the feeder cable 4 can pass through the first cable terminal 21. The second cable terminal 22 is configured to connect the drop cable 5, or the drop cable 5 can pass through the second cable terminal 22.

According to the solution shown in this embodiment of the present disclosure, the optical cable box 1 is mainly configured to protect the optical cable connection box 2, and may be in any shape. For example, the optical cable box 1 may be in a shape of a box or a cylinder. The first cable port 13 and the second cable port 14 are provided on the optical cable box 1. The feeder cable 4 can pass through the first cable port 13 and enter the optical cable box 1. The drop cable 5 can pass through the second cable port 14. The feeder cable 4 is an optical cable routed from an operator equipment room to the optical cable box 1. The drop cable 5 is an optical cable routed from the optical cable box 1 to a fiber optic transmission device, such as an optical modem, in a user home.

At least one first cable port 13 and at least one second cable port 14 are provided on the optical cable box 1 according to an actual requirement. Specifically, one first cable port 13 and one second cable port 14 may be provided on the optical cable box 1. In this way, one or more feeder cables 4 can pass through the first cable port 13, and one or more drop cables 5 can pass through the second cable port 14. For another example, one first cable port 13 and a plurality of second cable ports 14 may be provided on the optical cable box 1. In this way, one or more feeder cables 4 can pass through the first cable port 13, and one drop cable 5 can pass through one second cable port 14. The plurality of second cable ports 14 can make routing of the drop cables 5 relatively clear, so that the drop cables 5 can be conveniently repaired and maintained for users in the future. For another example, a plurality of first cable ports 13 and one second cable port 14 may be provided on the optical cable box 1. In this way, one feeder cable 4 can pass through one first cable port 13, and one or more drop cables 5 can pass through the second cable port 14.

The first cable port 13 may be provided at any location on the optical cable box 1. For example, the first cable port 13 may be provided on a side wall of the optical cable box 1. For another example, the first cable port 13 may be provided at a bottom edge of the optical cable box 1. For another example, to prevent the feeder cable 4 from being bent when the feeder cable 4 is routed into the optical cable box 1, a corresponding setting may be: An opening direction of the first cable port 13 is a tangential direction of a bottom surface of the optical cable box 1 if the optical cable box 1 is in a shape of a cylinder, as shown in FIG. 1. The second cable port 14 may also be provided at any location. For example, the second cable port 14 may be provided on the top, on the side wall, or at the bottom of the optical cable box 1. The optical cable box 1 may include a body 11 and a cover 12. The second cable port 14 may be provided on the body 12 or on the cover 11. Alternatively, the second cable port 14 may be formed by both the cover 11 and the body 12.

The optical cable connection box 2 of the optical cable connection device is also referred to as a connectorised box, and is fastened in the optical cable box 1 in a detachable manner, to connect the feeder cable 4 and the drop cable 5. A structure, such as a fiber optic connector or an adapter, may be disposed in the optical cable connection box 2. The first cable terminal 21 and the second cable terminal 22 are further provided on the optical cable connection box 2. The first cable terminal 21 is configured to connect the feeder cable 4, or the feeder cable 4 can pass through the first cable terminal 21. If the first cable port 13 is provided at the bottom of the optical cable box 1, the first cable terminal 21 may be provided at the bottom of the optical cable connection box 2, to facilitate access of the feeder cable 4. The second cable terminal 22 is configured to connect the drop cable 5, or the drop cable 5 can pass through the second cable terminal 22. If the second cable port 14 is provided on a side wall on the top of the optical cable box 1, the second cable terminal 22 may be provided on the top of the optical cable connection box 2, to facilitate access of the drop cable 5. In an implementation, the first cable terminal 21 is a via provided on an enclosure of the optical cable connection box 2, so that the feeder cable 4 passes through the first cable terminal 21 and connects to the structure in the optical cable connection box 2; and the second cable terminal 22 is an adapter disposed on the optical cable connection box 2, to connect the drop cable 5, and specifically, connect to a connector at an end of the drop cable 5. At least one first cable terminal 21 and at least one second cable terminal 22 may be provided according to an actual requirement. For example, one first cable terminal 21 and a plurality of second cable terminals 22 may be provided. In this way, the optical cable connection box 2 may be used by a plurality of users, and a drop cable 5 of each user is connected to one of the second cable terminals 22.

During actual application, the optical cable connection box 2 may be disposed in the optical cable box 1. However, to ensure that the optical cable connection box 2 is not affected when the drop cable 5 is being routed to a user home, correspondingly, the optical cable connection box 2 is fastened in the optical cable box 1 in a detachable manner. Specifically, the optical cable connection box 2 may be fastened in the optical cable box 1 by using a screw or a bolt or through buckling.

In this way, when installing the optical cable connection box 2 in a residential area, a skilled person does not need to build a handhole, and only needs to directly bury the optical cable box 1 underground after installing the optical cable connection box 2 in the optical cable box 1. The optical cable box 1 is configured to protect the optical cable connection box 2. It can be learned that an engineering period for installing the optical cable connection box 2 is relatively short, and an installation process is simple.

In a possible implementation, the optical cable connection device further includes an installation base 3. The installation base 3 is fastened in the optical cable box 1. The optical cable connection box 2 is fastened to the installation base 3. The installation base 3 is fastened to the optical cable box 1 in a detachable manner; or the optical cable connection box 2 is fastened to the installation base 3 in a detachable manner; or the installation base 3 is fastened to the optical cable box 1 in a detachable manner, and the optical cable connection box 2 is fastened to the installation base 3 in a detachable manner.

According to the solution shown in this embodiment of the present disclosure, the optical cable connection box 2 may be fastened in the optical cable box 1 by using the installation base 3; and the installation base 3 is fastened to the optical cable box 1 in a detachable manner; or the optical cable connection box 2 is fastened to the installation base 3 in a detachable manner; or the installation base 3 is fastened to the optical cable box 1 in a detachable manner, and the optical cable connection box 2 is fastened to the installation base 3 in a detachable manner. Specifically, in a manner 1, the installation base 3 may be integrated with the optical cable box 1, and the optical cable connection box 2 is connected and fastened to the installation base 3 in a detachable manner. In this case, the installation base 3 may be a support disposed on an inner wall of the optical cable box 1, to fasten the optical cable connection box 2 in the optical cable box 1, and the optical cable connection box 2 may be installed on the installation base 3 through buckling or by using a screw. In a manner 2, the optical cable connection box 2 is integrated with the installation base 3, and the installation base 3 is fastened and installed in the optical cable box 1 in a detachable manner. In this case, the installation base 3 may be a base disposed at the bottom of the optical cable connection box 2, to fasten the optical cable connection box 2 in the optical cable box 1, and the installation base 3 may be installed on an inner wall of the optical cable box 1 through fitting between a protrusion and a groove or by using a screw. In a manner 3, the installation base 3 is fastened and installed in the optical cable box 1 in a detachable manner, and the optical cable connection box 2 is fastened and installed on the installation base 3 in a detachable manner. The foregoing detachable fastening manner may be fitting between a protrusion and a groove, may be a connection by using a screw, or may be buckling. Fastening the optical cable connection box 2 in the optical cable box 1 by using the installation base 3 can improve stability of the optical cable connection box 2 in the optical cable box 1.

In a possible implementation, the installation base 3 includes at least one supporting arm 33, and the supporting arm 33 is installed in the optical cable box 1.

According to the solution shown in this embodiment of the present disclosure, there may be one supporting arm 33; or there may be two supporting arms 33 that are disposed opposite to each other and installed in the optical cable box 1; or there may be a plurality of supporting arms 33 that are evenly disposed. The supporting arm 33 may be installed in the optical cable box 1 in a plurality of manners. For example, the supporting arm 33 may be installed in the optical cable box 1 by using threads or a bolt. For another example, the supporting arm 33 may be installed in the optical cable box 1 through fitting between a protrusion and a groove. With the supporting arm 33, the installation base 3 can be easily installed in the optical cable box 1, and a skilled person can conveniently remove the installation base 3 from the optical cable box 1 in the future to repair and maintain the optical cable connection box 2.

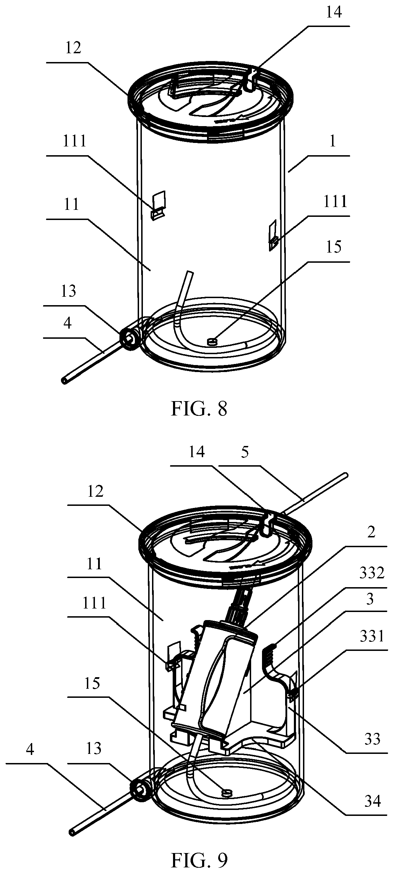

In a possible implementation, the optical cable box 1 includes the body 11 and the cover 12, and a first fastening portion 331 is disposed on each supporting arm 33. As shown in FIG. 8, a second fastening portion 111 fitting the first fastening portion 331 is disposed on an inner wall of the body 11. As shown in FIG. 9, the supporting arm 33 is installed in the body 11 through fitting between the first fastening portion 331 and the second fastening portion 111.

According to the solution shown in this embodiment of the present disclosure, the body 11 and the cover 12 of the optical cable box 1 may be connected by using threads or through buckling. The first fastening portion 331 is disposed on each supporting arm 33. As shown in FIG. 8, the second fastening portion 111 fitting the first fastening portion 331 is disposed on the inner wall of the body 11. As shown in FIG. 9, the supporting arm 33 is installed in the body 11 through fitting between the first fastening portion 331 and the second fastening portion 111. Such fitting between the first fastening portion 331 and the second fastening portion 111 can prevent the installation base 3 from departing from the body 11 when a skilled person is pulling the drop cable 5, so that the installation base 3 can be securely fastened in the body 11.

In a possible implementation, the first fastening portion 331 is a protrusion, and the second fastening portion 111 is a groove; or the first fastening portion 331 is a groove, and the second fastening portion 111 is a protrusion.

According to the solution shown in this embodiment of the present disclosure, the first fastening portion 331 may be a protrusion, and the second fastening portion 111 may be a groove fitting the protrusion; or the first fastening portion 331 may be a groove, and the second fastening portion 111 may be a protrusion fitting the groove. Fitting between the protrusion and the groove can prevent the installation base 3 from departing from the body 11 when a skilled person is pulling the drop cable 5, so that the installation base 3 can be securely fastened in the body 11.

In a possible implementation, at least one sliding slot 112 in which the supporting arm 33 can slide is provided on the inner wall of the body 11, one end of the sliding slot 112 is located on the top of the body 11, the second fastening portion 111 is located in the sliding slot 112, and the supporting arm 33 slides from one end of the sliding slot 112 until the first fastening portion 331 and the second fastening portion 111 are buckled.

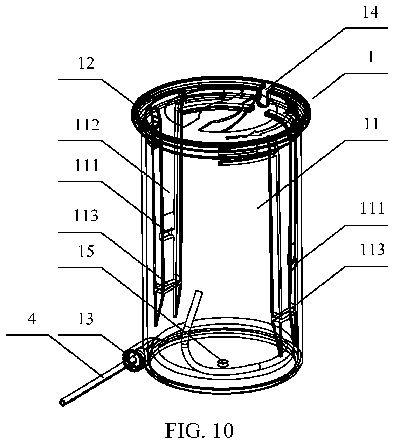

According to the solution shown in this embodiment of the present disclosure, a structure of the sliding slot 112 may be set according to a specific condition of the body 11. For example, a manner may be: The sliding slot 112 may be a groove provided on the inner wall of the body 11, and one end of the sliding slot 112 is located on the top of the body 11. In this case, the wall of the body 11 needs to satisfy specific thickness. Another manner may be: Two vertical plates perpendicular to the inner wall of the body 11 are disposed on the inner wall. The two vertical plates form the sliding slot 112, and one end of the sliding slot 112 is located on the top of the body 11. In this case, no specific requirement is imposed on wall thickness of the body 11. Weight of the optical cable box 1 may be relatively reduced. FIG. 10 shows the second manner as an example.

There may be one sliding slot 112, that is, one sliding slot 112 is provided on the inner wall of the body 11 along a height direction of the body 11. In this case, the installation base 3 may include two supporting arms 33, and one second fastening portion 111 is located in the sliding slot 112. In this way, when a first fastening portion 331 of one supporting arm 33 is buckled to the second fastening portion 111 in the sliding slot 112, a first fastening portion 331 of the other supporting arm 33 can be also buckled to the other second fastening portion 111, so that the installation base 3 can be fastened in the body 11 through fitting between the first fastening portion 331 and the second fastening portion 111.

Alternatively, a quantity of sliding slots 112 may be set according to a quantity of supporting arms 33. In this way, fitting between the first fastening portion 331 and the second fastening portion 111 can be more accurate. As shown in FIG. 10, two sliding slots 112 are provided on the body 11, the installation base 3 includes two supporting arms 33, and each supporting arm 33 is corresponding to one sliding slot 112. In this way, when the two supporting arms 33 of the installation base 3 slide in the two sliding slots 112 of the body 11, the two supporting arms 33 do not turn round, so that a first fastening portion 331 on each supporting arm 33 is more accurately buckled to a corresponding second fastening portion 111.

In a possible implementation, the installation base 3 may include a base plate 34. As shown in FIG. 10, a tray 113 used to support the base plate 34 may be disposed at the bottom of each sliding slot 112.

According to the solution shown in this embodiment of the present disclosure, if the sliding slot 112 is a groove provided on the inner wall of the body 11, the tray 113 may be a side wall of the groove (a side wall at the bottom of the sliding slot 112). If the sliding slot 112 is a sliding slot structure formed by two vertical plates, the tray 113 may be a horizontal plate fastened at the bottom of the sliding slot 112. A distance between the first fastening portion 331 and a lower surface of the base plate 34 is equal to or slightly less than a distance between the second fastening portion 111 and an upper surface of the tray 113. In this way, during fitting between the first fastening portion 331 and the second fastening portion 111, the base plate 34 of the installation base 3 may be in contact with the tray 113 at the bottom of the sliding slot 112. Therefore, disposing the tray 113 at the bottom of the sliding slot 112 can avoid a case that the installation base 3 is fastened in the body 11 in a suspended manner for a long time, and drops down to the bottom of the body 11 and damages the feeder cable 4. Therefore, stability of the installation base 3 in the body 11 can be improved.

In a possible implementation, there are two supporting arms 33 that are disposed opposite to each other.

According to the solution shown in this embodiment of the present disclosure, the quantity of supporting arms 33 may be randomly set according to an actual requirement. For example, there may be one supporting arm 33; there may be two supporting arms 33 that are disposed opposite to each other and installed in the optical cable box 1; or there may be a plurality of supporting arms 33 that are evenly disposed. Provided that the installation base 3 is securely fastened in the optical cable box 1, a structure is relatively simple if there are two supporting arms 33 that are disposed opposite to each other.

In a possible implementation, the installation base 3 includes a fastening plate 30. Clamping portions 31 used to fasten the optical cable connection box 2 are disposed on both sides of the fastening plate 30. The clamping portions 31 clamp and fasten the optical cable connection box 2 to the fastening plate 30.

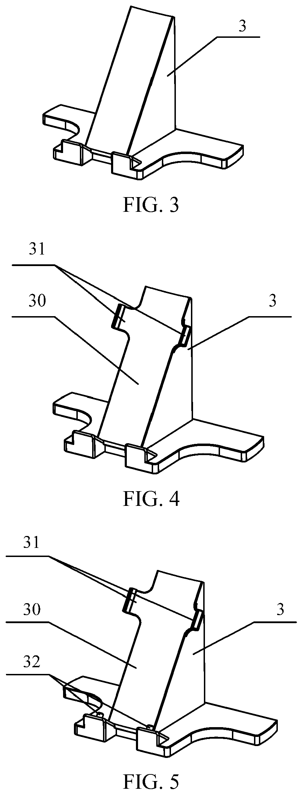

According to the solution shown in this embodiment of the present disclosure, if the optical cable connection box 2 is fastened to the installation base 3 in a detachable manner, there are a plurality of manners of fastening the optical cable connection box 2 to the installation base 3. For example, a fastening manner may be: The optical cable connection box 2 is fastened to the installation base 3 by using a screw or a bolt. Another fastening manner may be: As shown in FIG. 4, the installation base 3 may include the fastening plate 30. The clamping portions 31 used to fasten the optical cable connection box 2 may be disposed on both sides of the fastening plate 30. The clamping portions 31 clamp and fasten the optical cable connection box 2 to the fastening plate 30. Therefore, stability of the optical cable connection box 2 on the installation base 3 can be improved.

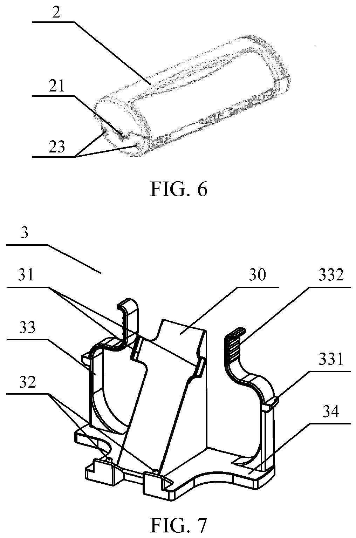

In a possible implementation, as shown in FIG. 5, a third fastening portion 32 is disposed at the bottom of the fastening plate 30; and as shown in FIG. 6, a fourth fastening portion 23 fitting the third fastening portion 32 is disposed at the bottom of the optical cable connection box 2.

According to the solution shown in this embodiment of the present disclosure, to further improve stability of fastening between the optical cable connection box 2 and the installation base 3, a corresponding structure may be: As shown in FIG. 5, the third fastening portion 32 is disposed at the bottom of the fastening plate 30; and as shown in FIG. 6, the fourth fastening portion 23 fitting the third fastening portion 32 is disposed at the bottom of the optical cable connection box 2. In this way, the optical cable connection box 2 is fastened to the fastening plate 30 through clamping of the clamping portions 31 and fitting between the third fastening portion 32 and the fourth fastening portion 23. Therefore, the fastening between the optical cable connection box 2 and the installation base 3 is more stable.

In a possible implementation, the third fastening portion 32 is a buckle, and the fourth fastening portion 23 is a slot; or the third fastening portion 32 is a slot, and the fourth fastening portion 23 is a buckle.

According to the solution shown in this embodiment of the present disclosure, the third fastening portion 32 may be a buckle, and the fourth fastening portion 23 may be a slot fitting the buckle; or the third fastening portion 32 may be a slot, and the fourth fastening portion 23 may be a buckle fitting the slot. As shown in FIG. 5 and FIG. 6, the third fastening portion 32 is a buckle, and the fourth fastening portion 23 is a slot fitting the buckle. Fitting between the buckle and the slot enables the optical cable connection box 2 to be fastened to the installation base 3.

In a possible implementation, a drainage hole 15 is provided at the bottom of the optical cable box 1.

According to the solution shown in this embodiment of the present disclosure, because the second cable port 14 is provided on the optical cable box 1, liquid, such as rainwater, may enter the optical cable box 1 through the second cable port 14. A corresponding structure may be: The drainage hole 15 may be provided at the bottom of the optical cable box 1. For example, as shown in FIG. 1, the drainage hole 15 may be provided at the bottom center of the body 11. This can prevent damage to the optical cable connection box 2 that is caused by water accumulation in the optical cable box 1, and therefore can extend a service life of the optical cable connection device.

In a possible implementation, an opening direction of the first cable port 13 is a tangential direction of a bottom surface of the optical cable box 1.

According to the solution shown in this embodiment of the present disclosure, to prevent the feeder cable 4 from being bent when the feeder cable 4 is routed into the optical cable box 1, a corresponding setting may be: As shown in FIG. 1, if the optical cable box 1 is in a shape of a cylinder, the opening direction of the first cable port 13 is the tangential direction of the bottom surface of the optical cable box 1. This can protect the feeder cable, and therefore can extend a service life of the feeder cable.

The technical solutions provided in this embodiment of the present disclosure may include the following beneficial effects:

In this embodiment of the present disclosure, the optical cable connection device includes the optical cable box and the optical cable connection box. At least one first cable port through which the feeder cable can pass and at least one second cable port through which the drop cable can pass are provided on the optical cable box. The first cable terminal and the second cable terminal are provided on the optical cable connection box. The optical cable connection box is fastened and installed in the optical cable box in a detachable manner. The first cable terminal is configured to connect the feeder cable. The second cable terminal is configured to connect the drop cable. In this way, when installing the optical cable connection box in a residential area, a skilled person first routes the feeder cable into the optical cable box through the first cable port, then connects the feeder cable to the first cable terminal of the optical cable connection box to install the feeder cable on the optical cable connection box, and finally directly buries the optical cable box underground. It can be learned that a skilled person does not need to build a handhole when installing the optical cable connection box. After the optical cable connection box is installed in the optical cable box, the optical cable box can be directly buried underground. The optical cable box can protect the optical cable connection box. Therefore, an engineering period for installing the optical cable connection box is relatively short.

It should be understood that the foregoing general descriptions and the following detailed descriptions are merely examples and interpretations, and do not constitute any limitation on the present disclosure.

### BRIEF DESCRIPTION OF DRAWINGS

In the drawings:
FIG. 1 is a schematic structural diagram of an optical cable box according to an embodiment;
FIG. 2 is a schematic structural diagram of an optical cable connection box according to an embodiment;
FIG. 3 is a schematic structural diagram of an installation base according to an embodiment;
FIG. 4 is a schematic structural diagram of an installation base according to an embodiment;
FIG. 5 is a schematic structural diagram of an installation base according to an embodiment;
FIG. 6 is a schematic structural diagram of an optical cable connection box according to an embodiment;
FIG. 7 is a schematic structural diagram of an installation base according to an embodiment;
FIG. 8 is a schematic structural diagram of an optical cable box according to an embodiment;
FIG. 9 is a schematic structural diagram of an optical cable connection device according to an embodiment;
FIG. 10 is a schematic structural diagram of an optical cable box according to an embodiment;
FIG. 11 is a schematic structural diagram of fastening an optical cable connection box to an installation base according to an embodiment; and
FIG. 12 is a schematic structural diagram of an optical cable connection device according to an embodiment.

**Legend descriptions:**

| | |
|---|---|
| 1. Optical cable box | 2. Optical cable connection box |
| 3. Installation base | 4. Feeder cable |
| 5. Drop cable | 11. Body |
| 12. Cover | 13. First cable port |
| 14. Second cable port | 15. Drainage hole |
| 21. First cable terminal | 22. Second cable terminal |
| 23. Fourth fastening portion | 30. Fastening plate |
| 31. Clamping portion | 32. Third fastening portion |
| 33. Supporting arm | 34. Base plate |
| 111. Second fastening portion | 112. Sliding slot |
| 113. Tray | 331. First fastening portion |
| 332. Holder | |

### DESCRIPTION OF EMBODIMENTS

An embodiment of the present disclosure provides an optical cable connection device. As shown in FIG. 1, with reference to FIG. 2, the optical cable connection device includes an optical cable box 1 and an optical cable connection box 2. At least one first cable port 13 through which a feeder cable 4 can pass and at least one second cable port 14 through which a drop cable 5 can pass are provided on the optical cable box 1. A first cable terminal 21 and a second cable terminal 22 are provided on the optical cable connection box 2. The optical cable connection box 2 is fastened and installed in the optical cable box 1 in a detachable manner. The first cable terminal 21 is configured to connect the feeder cable 4, or the feeder cable 4 can pass through the first cable terminal 21. The second cable terminal 22 is configured to connect the drop cable 5, or the drop cable 5 can pass through the second cable terminal 22.

The feeder cable 4 is an optical cable routed from an operator equipment room to the optical cable box 1. A plurality of feeder cables 4 or one feeder cable 4 that includes a plurality of optical fibers may be routed into one optical cable box 1. The drop cable 5 is an optical cable routed from the optical cable box 1 to a fiber optic transmission device, such as an optical modem, in a user home. Usually, one drop cable 5 includes a single optical fiber. One or more drop cables 5 may be routed from one optical cable box 1.

In an implementation, the optical cable box 1 of the optical cable connection device is mainly used to protect the optical cable connection box 2, and may be in any shape. For example, the optical cable box 1 may be in a shape of a box, or as shown in FIG. 1, may be in a shape of a cylinder. The optical cable connection box 2 is fastened in the optical cable box 1 in a detachable manner. In a structure, as shown in FIG. 1, the optical cable box 1 may include a body 11 and a cover 12. The body 11 and the cover 12 may be connected by using threads or through buckling. As shown in FIG. 1, the first cable port 13 and the second cable port 14 are provided on the optical cable box 1. The feeder cable 4 can pass through the first cable port 13 and enter the optical cable box 1. The drop cable 5 can pass through the second cable port 14.

At least one first cable port 13 and at least one second cable port 14 are provided according to an actual requirement.

For example, one first cable port 13 and one second cable port 14 may be provided on the optical cable box 1. In this way, one, two, or more feeder cables 4 can pass through the first cable port 13, and one, two, or more drop cables 5 can pass through the second cable port 14. For another example, one first cable port 13 and a plurality of second cable ports 14 may be provided on the optical cable box 1. In this way, one or more feeder cables 4 can pass through the first cable port 13, and one drop cable 5 can pass through one second cable port 14. The plurality of second cable ports 14 can make routing of drop cables 5 relatively clear, so that the drop cables 5 can be conveniently repaired and maintained for users in the future. For another example, a plurality of first cable ports 13 and one second cable port 14 may be provided on the optical cable box 1. In this way, one feeder cable 4 can pass through one first cable port 13, and one or more drop cables 5 can pass through the second cable port 14. A specific quantity of first cable ports 13 and a specific quantity of second cable ports 14 are not limited in this embodiment. For ease of description, one first cable port 13 and one second cable port 14 are used as an example in this embodiment and in the accompanying drawings of this embodiment.

In an implementation, the first cable port 13 may be provided at any location on the optical cable box 1. For example, the first cable port 13 may be provided on a side wall of the body 11. For another example, the first cable port 13 may be provided at a bottom edge of the body 11. For another example, to prevent the feeder cable 4 from being bent when the feeder cable 4 is routed into the optical cable box 1, a corresponding setting may be: As shown in FIG. 1, if the optical cable box 1 is in a shape of a cylinder, an opening direction of the first cable port 13 is a tangential direction of a bottom surface of the optical cable box 1. This can prevent the feeder cable 4 from being bent by a right angle when the feeder cable 4 is routed into the optical cable box 1, and therefore can protect the feeder cable 4 and extend a service life of the feeder cable 4. The second cable port 14 may also be provided at any location. For example, the second cable port 14 may be provided on a side wall on the top of the body 11. Specifically, if the body 11 and the cover 12 are connected by using threads, the second cable port 14 may be provided on the side wall on the top of the body 11, and extend downward to below the threads. In this way, the drop cable 5 does not block rotation between the cover 12 and the body 11. For another example, the second cable port 14 may be provided on the cover 12, or the second cable port 14 may be formed by both an opening on a side wall on the top of the body 11 and an opening at an edge of the cover 12. Specific locations of the first cable port 13 and the second cable port 14 are not limited in this embodiment.

Optionally, because the second cable port 14 is provided on the optical cable box 1, liquid, such as rainwater, may enter the optical cable box 1 through the second cable port 14. To prevent liquid, such as water, from accumulating in the optical cable box 1, a corresponding structure may be: A drainage hole 15 may be provided at the bottom of the optical cable box 1. For example, as shown in FIG. 1, the drainage hole 15 may be provided at a bottom center of the body 11. This can prevent damage to the optical cable connection box 2 caused by water accumulation in the optical cable box 1, and therefore can extend a service life of the optical cable connection box 2.

The optical cable connection box 2 of the optical cable connection device is also referred to as a connectorised box, and is fastened in the optical cable box 1 in a detachable manner, to connect the feeder cable 4 and the drop cable 5. The drop cable 5 and the optical cable connection box 2 are connected in a connectorised manner. Both connectorising and splicing are optical cable connection manners. However, connectorising is different from splicing. Splicing is an optical cable connection manner in which an operation needs to be performed by a specialized skilled person and an operation process is relatively complex. Connectorising is similar to fitting between a socket and a plug, and is a relatively simple optical cable connection manner that does not require operation of a specialized person.

The optical cable connection box 2 may include an enclosure and a structure disposed in the enclosure, such as a fiber optic connector or an adapter. Alternatively, the optical cable connection box 2 may be an enclosure, and a structure, such as a fiber optic connector or an adapter, may be further disposed in the optical cable connection box 2. The first cable terminal 21 and the second cable terminal 22 are further provided on the optical cable connection box 2. The first cable terminal 21 is configured to connect the feeder cable 4, or the feeder cable 4 can pass through the first cable terminal 21. The first cable terminal 21 may be provided at the bottom of the optical cable connection box 2, to facilitate access of the feeder cable 4. The first cable terminal 21 may be provided on the enclosure of the optical cable connection box 2 (for example, the first cable terminal 21 may be a via), so that the feeder cable 4 can pass through the first cable terminal 21. After passing through the first cable terminal 21, the feeder cable 4 is connected to the structure in the optical cable connection box 2, for example, is connected to an optical fiber on the fiber optic connector through splicing, or is connected to the fiber optic connector. Alternatively, the first cable terminal 21 may be connected to the feeder cable 2. A structure (such as the fiber optic connector or the optical fiber) that is in the optical cable connection box 2 and that is configured to connect the feeder cable 2 may be directly referred to as the first cable terminal 21. Alternatively, the structure configured to connect the feeder cable 2 may be directly disposed on the enclosure of the optical cable connection box 2. The second cable terminal 22 is configured to connect the drop cable 5, or the drop cable 5 can pass through the second cable terminal 22. The second cable terminal 22 may be provided on the top of the optical cable connection box 2, to facilitate access of the drop cable 5. The second cable terminal 22 may be provided on the enclosure of the optical cable connection box 2 (for example, the second cable terminal 22 may be a via), so that the drop cable 5 can pass through the second cable terminal 22. After passing through the second cable terminal 22, the drop cable 5 is connected to the structure in the optical cable connection box 2, for example, is connected to an optical fiber on the fiber optic connector through splicing, or is connected to the fiber optic connector. Alternatively, a fiber optic connector is disposed at an end of the drop cable 5, and the fiber optic connector is connected to an adapter, or the like. Alternatively, the second cable terminal 22 may be connected to the drop cable 5. A structure (such as the adapter, the fiber optic connector, or the optical fiber) that is in the optical cable connection box 2 and that is configured to connect the drop cable 5 may be directly referred to as the second cable terminal 22. Alternatively, the structure configured to connect the drop cable 5 may be directly disposed on the enclosure of the optical cable connection box 2. In an implementation, the first cable terminal 21 is a via provided on the enclosure of the optical cable connection box 2, so that the feeder cable 2 passes through the first cable terminal 21 and is connected to the structure in the optical cable connection box 2; and the second cable terminal 22 is an adapter disposed on the optical cable connection box 2, to be connected the drop cable 5, and specifically, connected to a connector at an end of the drop cable 5. At least one first cable terminal 21 and at least one second cable terminal 22 may be provided according to an actual requirement. For example, one first cable terminal 21 and a plurality of second cable terminals 22 may be provided. In this way, the optical cable connection box 2 may be used by a plurality of users, and a drop cable 5 of each user is connected to one of the second cable terminals 22. Certainly, to enable a plurality of users to use the optical cable connection device, a corresponding structure may be: A plurality of optical cable connection boxes 2 may be fastened in the optical cable box 1 in a detachable manner, and each optical cable connection box 2 is used by one user.

During actual application, the optical cable connection box 2 may be disposed in the optical cable box 1. However, to ensure that the optical cable connection box 2 is not affected when the drop cable 5 is being routed to a user home, correspondingly, the optical cable connection box 2 is fastened in the optical cable box 1 in a detachable manner. Specifically, the optical cable connection box 2 may be fastened in the body 11 by using a screw or a bolt or through buckling.

Based on the foregoing descriptions, when installing the optical cable connection box 2 in a residential area, a skilled person first routes the feeder cable 4 into the body 11 through the first cable port 13, then connects the feeder cable 4 to the first cable terminal 21 of the optical cable connection box 2 to install the feeder cable 4 on the optical cable connection box 2, and finally installs the cover 12 on the body 11 and directly buries the optical cable box 1 underground. The cover 12 may be buried underground or may be level with the ground. If the cover 12 is level with the ground, the cover 12 can be conveniently opened in the future. In this way, when installing the optical cable connection box 2 in the residential area, the skilled person does not need to build a handhole, and only needs to directly bury the optical cable box 1 underground after installing the optical cable connection box 2 in the optical cable box 1. Therefore, an engineering period for installing the optical cable connection box 2 is relatively short.

In addition, the drop cable 5 and the optical cable connection box 2 are connected in a connectorised manner. Therefore, when a user needs to subscribe to a network in the future, the user only needs to open the cover 12, and directly connect the fiber optic connector of the drop cable 5 to the second cable terminal 22 of the optical cable connection box 2. Installation is convenient and simple, and no operation needs to be performed by a specialized skilled person.

Optionally, the optical cable connection box 2 may be fastened in the optical cable box 1 by using a support. A corresponding structure may be: As shown in FIG. 3, the optical cable connection device may further include an installation base 3. The installation base 3 is fastened in the optical cable box 1. The optical cable connection box 2 is fastened to the installation base 3. The installation base 3 is fastened to the optical cable box 1 in a detachable manner; or the optical cable connection box 2 is fastened to the installation base 3 in a detachable manner; or the installation base 3 is fastened to the optical cable box 1 in a detachable manner, and the optical cable connection box 2 is fastened to the installation base 3 in a detachable manner.

To prevent the feeder cable 4 from being bent by a right angle when the feeder cable 4 is being connected to the first cable terminal 21, corresponding processing may be: As shown in FIG. 3, the installation base 3 is slant or vertical, so that the optical cable connection box 2 may be placed on the installation base 3 in a slant or vertical manner and fastened to the installation base 3. The second cable terminal 22 faces the top of the body 11, and the first cable terminal 21 faces the bottom of the body 11. Fastening the optical cable connection box 2 to the installation base 3 in such a slant manner can make the feeder cable 4 be connected to the first cable terminal 21 of the optical cable connection box 2 in a relatively natural manner. This prevents the feeder cable 4 from being bent by a right angle, and therefore can protect the feeder cable 4 and extend a service life of the feeder cable 4.

During actual application, a fastening manner between the optical cable box 1, the installation base 3, and the optical cable connection box 2 may be randomly set according to an actual requirement. For example, the installation base 3 is fastened to the optical cable box 1 in a detachable manner; or the optical cable connection box 2 is fastened to the installation base 3 in a detachable manner; or the installation base 3 is fastened to the optical cable box 1 in a detachable manner, and the optical cable connection box 2 is fastened to the installation base 3 in a detachable manner. Specifically, the fastening manner between the optical cable box 1, the installation base 3, and the optical cable connection box 2 may include but is not limited to the following several manners.

In a manner 1, the installation base 3 may be integrated with the optical cable box 1, and the optical cable connection box 2 is connected and fastened to the installation base 3 in a detachable manner. In this case, the installation base 3 may be a support disposed on an inner wall of the body 11, to fasten the optical cable connection box 2 in the body 11, and the optical cable connection box 2 may be installed on the installation base 3 through buckling or by using a screw. In this way, when installing the optical cable connection box 2, a skilled person first routes the feeder cable 4 into the body 11 through the first cable port 13 and connects the feeder cable 4 to the first cable terminal 21 of the optical cable connection box 2, then installs the optical cable connection box 2 on the installation base 3 in the body 11, and finally installs the cover 12 on the body 11 and directly buries the optical cable box 1 underground.

In a manner 2, the optical cable connection box 2 is integrated with the installation base 3, and the installation base 3 is fastened and installed in the optical cable box 1 in a detachable manner. In this case, the installation base 3 may be a base disposed at the bottom of the optical cable connection box 2, to fasten the optical cable connection box 2 in the body 11, and the installation base 3 may be installed on an inner wall of the body 11 through fitting between a protrusion and a groove or by using a screw. In this way, when installing the optical cable connection box 2, a skilled person first routes the feeder cable 4 into the body 11 through the first cable port 13 and connects the feeder cable 4 to the first cable terminal 21 of the optical cable connection box 2, then installs the installation base 3 in the body 11, and finally installs the cover 12 on the body 11 and directly buries the optical cable box 1 underground.

In a manner 3, the installation base 3 is fastened and installed in the optical cable box 1 in a detachable manner, and the optical cable connection box 2 is fastened and installed on the installation base 3 in a detachable manner. The foregoing detachable fastening manner may be fitting between a protrusion and a groove, may be a connection by using a screw, or may be buckling. In this way, when installing the optical cable connection box 2, a skilled person first fastens the optical cable connection box 2 to the installation base 3, and then routes the feeder cable 4 into the body 11 through the first cable port 13. The foregoing two steps may be performed simultaneously by two skilled persons, to reduce an engineering time and improve engineering efficiency. Then, the skilled person connects the feeder cable 4 to the first cable terminal 21 of the optical cable connection box 2 to install the installation base 3 in the body 11, and finally installs the cover 12 on the body 11 and directly buries the optical cable box 1 underground.

In the foregoing fastening manners, the optical cable connection box 2 can be conveniently installed if the installation base 3 is fastened in the optical cable box 1 at last in a time sequence. A reason is that a skilled person usually fastens the optical cable connection box 2 in the body 11 after connecting the feeder cable 4 to the first cable terminal 21 of the optical cable connection box 2. If the installation base 3 has already been fastened in the optical cable box 1, due to blocking of the installation base 3, the skilled person cannot conveniently coil a surplus part of the feeder cable 4 at the bottom of the body 11. In addition, the feeder cable 4 may be further bent, affecting transmission of an optical signal. Therefore, fastening the installation base 3 in the body 11 at last helps the skilled person conveniently sort the surplus part of the feeder cable 4, prevents the feeder cable 4 from being bent by a right angle, and therefore can protect the feeder cable 4 and extend a service life of the feeder cable 4.

The following describes the manner of fastening between the optical cable connection box 2 and the installation base 3 in detail.

From the foregoing descriptions, it can be learned that the optical cable connection box 2 may be fastened to the installation base 3 in a non-detachable manner, that is, the optical cable connection box 2 and the installation base 3 are integrated. Alternatively, the optical cable connection box 2 may be fastened to the installation base 3 in a detachable manner. If the optical cable connection box 2 is fastened to the installation base 3 in a detachable manner, there are a plurality of manners of fastening the optical cable connection box 2 to the installation base 3. For example, a fastening manner may be: The optical cable connection box 2 is fastened to the installation base 3 by using a screw or a bolt. Another fastening manner may be: As shown in FIG. 4, the installation base 3 includes a fastening plate 30. Clamping portions 31 used to fasten the optical cable connection box 2 may be disposed on both sides of the fastening plate 30. The clamping portions 31 clamp and fasten the optical cable connection box 2 to the fastening plate 30, so that the optical cable connection box 2 is clamped and fastened to the installation base 3 by using the clamping portions 31. To improve stability of the optical cable connection box 2 on the installation base 3, a corresponding setting may be: A surface on which the fastening plate 30 is in contact with the optical cable connection box 2 has a curved surface fitting an outer surface of the optical cable connection box 2. In this way, when the optical cable connection box 2 is fastened to the fastening plate 30 by using the clamping portions 31, the curved surface of the fastening plate 30 is attached to the outer surface of the optical cable connection box 2, and the clamping portions 31 on both sides of the fastening plate 30 closely clamp and fasten the optical cable connection box 2 to the fastening plate 30. Therefore, the stability of the optical cable connection box 2 on the installation base 3 can be improved.

Optionally, to further improve stability of fastening between the optical cable connection box 2 and the installation base 3, a corresponding structure may be: As shown in FIG. 5, a third fastening portion 32 is disposed at the bottom of the fastening plate 30; and as shown in FIG. 6, a fourth fastening portion 23 fitting the third fastening portion 32 is disposed at the bottom of the optical cable connection box 2. In this way, the optical cable connection box 2 is fastened to the fastening plate 30 through clamping of the clamping portions 31 and fitting between the third fastening portion 32 and the fourth fastening portion 23. Therefore, the fastening between the optical cable connection box 2 and the installation base 3 is more stable.

The third fastening portion 32 may be a buckle, and the fourth fastening portion 23 may be a slot fitting the buckle. Alternatively, the third fastening portion 32 may be a slot, and the fourth fastening portion 23 may be a buckle fitting the slot. As shown in FIG. 5 and FIG. 6, the third fastening portion 32 is a buckle, and the fourth fastening portion 23 is a slot fitting the buckle.

In an implementation, the two clamping portions 31 on both sides of the fastening plate 30 are elastic. That is, when placing the optical cable connection box 2 on the fastening plate 30, a skilled person may slightly pull apart the two clamping portions 31 to increase a distance between the two clamping portions 31, so that the optical cable connection box 2 can be clamped between the two clamping portions 31. In this way, a process of fastening the optical cable connection box 2 to the installation base 3 by a skilled person may be: first, pulling apart the two clamping portions 31; then, placing the optical cable connection box 2 on the curved surface of the fastening plate 30, and buckling the third fastening portion 32 to the fourth fastening portion 23; finally, releasing the two clamping portions 31. Therefore, the optical cable connection box 2 can be securely fastened to the installation base 3 through clamping of the clamping portions 31 and fitting between the third fastening portion 32 and the fourth fastening portion 23.

The foregoing describes the manner of fastening the optical cable connection box 2 to the installation base 3. After fastening the optical cable connection box 2 to the installation base 3, the skilled person fastens the installation base 3 in the optical cable box 1. The following describes a manner of fastening the installation base 3 in the optical cable box 1.

From the foregoing descriptions, it can be learned that the installation base 3 may be fastened in the optical cable box 1 in a non-detachable manner, that is, the installation base 3 and the optical cable box 1 are integrated. Alternatively, the installation base 3 may be fastened in the optical cable box 1 in a detachable manner. If the installation base 3 is fastened in the optical cable box 1 in a detachable manner, as shown in FIG. 7, the installation base 3 may include at least one supporting arm 33 that is installed in the optical cable box 1.

A quantity of supporting arms 33 may be randomly set according to an actual requirement. For example, there may be one supporting arm 33; there may be two supporting arms 33 that are disposed opposite to each other and installed in the optical cable box 1; or there may be a plurality of supporting arms 33 that are evenly disposed. FIG. 7 shows two supporting arms 33 as an example. There are a plurality of manners of installing the supporting arm 33 in the optical cable box 1. For example, the supporting arm 33 may be installed by using a screw or a bolt or through fitting between a protrusion and a groove. Specifically, the installation manners may include but are not limited to the following.

In a manner 1, the supporting arm 33 is installed on the inner wall of the body 11 by using a screw. Specifically, a threaded hole may be provided on the supporting arm 33. A threaded hole may also be provided at a corresponding location that is on the inner wall of the body 11 and that is for installing the supporting arm 33. The supporting arm 33 is installed on the inner wall of the body 11 by using the screw, so that the installation base 3 is fastened in the body 11.

In a manner 2, as shown in FIG. 7, two supporting arms 33 are used as an example, and a first fastening portion 331 is disposed on each supporting arm 33; as shown in FIG. 8, a second fastening portion 111 fitting the first fastening portion 331 is disposed on the inner wall of the body 11; as shown in FIG. 9, the supporting arm 33 is installed in the body 11 through fitting between the first fastening portion 331 and the second fastening portion 111, so that the installation base 3 is securely fastened in the body 11. The first fastening portion 331 may be a protrusion, and the second fastening portion 111 may be a groove fitting the protrusion. Alternatively, the first fastening portion 331 may be a groove, and the second fastening portion 111 may be a protrusion fitting the groove. The installation base 3 can be securely fastened in the body 11 through fitting between the protrusion and the groove. A specific setting of the protrusion and the groove is not limited in this embodiment. For example, in FIG. 7, the first fastening portion 331 is a protrusion, and in FIG. 8, the second fastening portion 111 is a groove.

Optionally, to facilitate fitting between the first fastening portion 331 and the second fastening portion 111, corresponding processing may be: If the first fastening portion 331 is a protrusion and the second fastening portion 111 is a groove, a lower edge of the protrusion and an upper edge of the groove may be set to be curved. In this way, the protrusion can enter the groove more easily. If the first fastening portion 331 is a groove and the second fastening portion is a protrusion, a lower edge of the groove and an upper edge of the protrusion may be set to be curved. Likewise, the protrusion can enter the groove more easily.

Optionally, to help a skilled person conveniently install the installation base 3 in the body 11, correspondingly, as shown in FIG. 7 and with reference to FIG. 9, a holder 332 is disposed in an upper part of each supporting arm 33. For example, there are two supporting arms 33. When installing the installation base 3, a skilled person may hold holders 332 of the two supporting arms 33 respectively by using two fingers. Likewise, when removing the installation base 3 from the body 11, a skilled person may also hold the holders 332 of the two supporting arms 33 respectively by using two fingers. Therefore, the holders 332 of the supporting arms 33 can help the skilled person conveniently install and remove the installation base 3.

Optionally, to prevent the first fastening portion 331 or the second fastening portion 111 from blocking installation of the supporting arm 33 in the body 11, a corresponding structure may be: Each supporting arm 33 is an elastic part. For example, the installation base 3 includes two supporting arms 33. When a skilled person holds holders 332 of the two supporting arms 33, a distance between the two holders 332 may become smaller. Therefore, as shown in FIG. 9, the first fastening portion 331 can smoothly fit the second fastening portion 111, so that the installation base 3 is fastened in the body 11.

Optionally, to help conveniently fasten the installation base 3 in the body 11 and to make the first fastening portion 331 fit the second fastening portion 111 more accurately, a corresponding setting may be: As shown in FIG. 10, at least one sliding slot 112 in which the supporting arm 33 can slide is provided on the inner wall of the body 11, one end of the sliding slot 112 is located on the top of the body 11, the second fastening portion 111 is located in the sliding slot 112, and the supporting arm 33 slides from one end of the sliding slot 112 until the first fastening portion 331 and the second fastening portion 111 are buckled.

In an implementation, a structure of the sliding slot 112 may be set according to a specific condition of the body 11. For example, a manner may be: The sliding slot 112 may be a groove provided on the inner wall of the body 11, and one end of the sliding slot 112 is located on the top of the body 11. In this case, the wall of the body 11 needs to satisfy specific thickness. Another manner may be: Two vertical plates perpendicular to the inner wall of the body 11 are disposed on the inner wall. The two vertical plates form the sliding slot 112, and one end of the sliding slot 112 is located on the top of the body 11. In this case, no specific requirement is imposed on wall thickness of the body 11. Weight of the optical cable box 1 may be relatively reduced. FIG. 10 shows the second manner as an example.

There may be one sliding slot 112, that is, one sliding slot 112 is provided on the inner wall of the body 11 along a height direction of the body 11. In this case, the installation base 3 may include two supporting arms 33, and one second fastening portion 111 is located in the sliding slot 112. In this way, when a first fastening portion 331 of one supporting arm 33 is buckled to the second fastening portion 111 in the sliding slot 112, a first fastening portion 331 of the other supporting arm 33 can be also buckled to the other second fastening portion 111, so that the installation base 3 can be fastened in the body 11 through fitting between the first fastening portion 331 and the second fastening portion 111.

Alternatively, a quantity of sliding slots 112 may be set according to a quantity of supporting arms 33. For example, one sliding slot 112 may be correspondingly provided for one supporting arm 33. In this way, fitting between the first fastening portion 331 and the second fastening portion 111 can be more accurate. As shown in FIG. 10, two sliding slots 112 are provided on the body 11, the installation base 3 includes two supporting arms 33, and each supporting arm 33 is corresponding to one sliding slot 112. In this way, when the two supporting arms 33 of the installation base 3 slide in the two sliding slots 112 of the body 11, the two supporting arms 33 do not turn round, so that a first fastening portion 331 on each supporting arm 33 is more accurately buckled to a corresponding second fastening portion 111.

During actual application, after routing the feeder cable 4 into the body 1 through the first cable port 13, a skilled person usually connects, outside the body 11, the feeder cable 4 to the first cable terminal 21 of the optical cable connection box 2. Then, when the optical cable connection box 2 is fastened in the body 11, there is a surplus part of the feeder cable 4, and the surplus part of the feeder cable 4 is usually coiled at the bottom of the body 11. To prevent the optical cable connection box 2 from pressing down on the feeder cable 4, the optical cable connection box 2 is usually fastened to the inner wall of the body 11 in a suspended manner; or the installation base 3 is fastened to the inner wall of the body 11 in a suspended manner, and the optical cable connection box 2 is fastened to the installation base 3. When the installation base 3 is fastened in a suspended manner, from the foregoing descriptions, it can be learned that, if the first fastening portion 331 is a protrusion and the second fastening portion 111 is a groove, a lower edge of the protrusion is curved. The optical cable connection box 2 has specific weight. After a long time, the supporting arm 33 may probably slide down along the sliding slot 112. As a result, the installation base 3 drops down to the bottom of the body 11, presses down on the surplus part of the feeder cable 4, and damages the feeder cable 4. To avoid the foregoing case, a corresponding setting may be: As shown in FIG. 7, the installation base 3 may include a base plate 34; and as shown in FIG. 10, a tray 113 used to support the base plate 34 may be disposed at the bottom of each sliding slot 112.

In an implementation, if the sliding slot 112 is a groove provided on the inner wall of the body 11, the tray 113 may be a side wall of the groove (a side wall at the bottom of the sliding slot 112). If the sliding slot 112 is a sliding slot formed by two vertical plates, the tray 113 may be a horizontal plate fastened at the bottom of the sliding slot 112. A distance between the first fastening portion 331 and a lower surface of the base plate 34 is equal to or slightly less than a distance between the second fastening portion 111 and an upper surface of the tray 113. In this way, during fitting between the first fastening portion 331 and the second fastening portion 111, the base plate 34 of the installation base 3 may be attached to the tray 113 at the bottom of the sliding slot 112.

In the foregoing manner of fastening the installation base 3 in the body 11 in a detachable manner, fitting between the first fastening portion 331 and the second fastening portion 111 can prevent the installation base 3 from departing from the body 11 when a skilled person is pulling the drop cable 5, and disposing the tray 113 at the bottom of the sliding slot 112 can avoid a case that the installation base 3 is fastened in the body 11 in a suspended manner for a long time, and drops down to the bottom of the body 11 and damages the feeder cable 4. Therefore, stability of the installation base 3 in the body 11 can be improved.

Based on the foregoing descriptions, if the optical cable connection box 2 is fastened to the installation base 3 in a detachable manner and the installation base 3 is fastened in the optical cable box 1 in a detachable manner, an actual application environment of the optical cable connection device may be as follows.

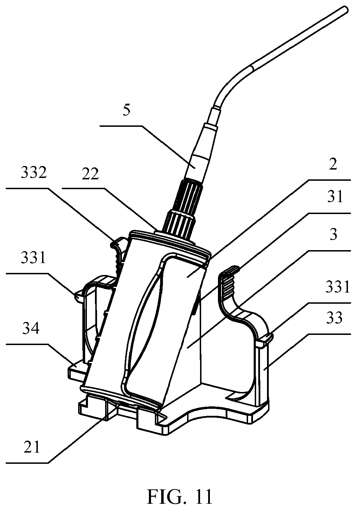

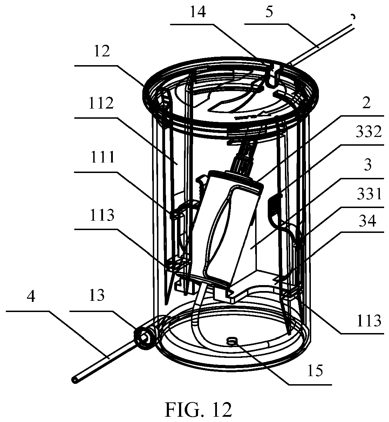

A skilled person first routes an end of the feeder cable 4 into the optical cable box 1 through the first cable port 13 of the optical cable box 1. Then, the skilled person connects, outside the optical cable box 1, the feeder cable 4 to the optical cable connection box 2, and fastens the optical cable connection box 2 to the installation base 3; or, as shown in FIG. 11, first fastens the optical cable connection box 2 to the installation base 3, and then connects the feeder cable to the first cable terminal 21 of the optical cable connection box 2. Then, the skilled person holds the holders 332 of the two supporting arms 33, and makes the installation base 3 slide down to the bottom of the body 11 along the sliding slot 112, until the first fastening portion 331, such as a protrusion, on the supporting arm 33 is buckled to the second fastening portion 111, such as a groove, in the sliding slot 112. As shown in FIG. 12, the base plate 34 of the installation base 3 is in contact with the tray 113 in the sliding slot 112, and the installation base 3 is securely fastened in the optical cable box 1. Finally, the skilled person installs the cover 12 on the body 11, and directly buries the whole optical cable box 1 underground. When a user needs to subscribe to a network service in the future, the user may remove the cover 12 from the optical cable box 1; then connect the fiber optic connector of the drop cable 5 to the second cable terminal 22 of the optical cable connection box 2, and install the cover 12, as shown in FIG. 12; and finally connect, in a buried manner or by using a shaft, the drop cable 5 to an optical modem in a home.

Optionally, a material of the optical cable connection device may be metal or plastic, and may be randomly set according to different application environments and an actual product requirement. This is not limited in this embodiment.

In this embodiment of the present disclosure, the optical cable connection device includes the optical cable box and the optical cable connection box. At least one first cable port through which the feeder cable can pass and at least one second cable port through which the drop cable can pass are provided on the optical cable box. The first cable terminal and the second cable terminal are provided on the optical cable connection box. The optical cable connection box is fastened and installed in the optical cable box in a detachable manner. The first cable terminal is configured to connect the feeder cable. The second cable terminal is configured to connect the drop cable. In this way, when installing the optical cable connection box in a residential area, a skilled person first routes the feeder cable into the optical cable box through the first cable port, then connects the feeder cable to the first cable terminal of the optical cable connection box to install the feeder cable on the optical cable connection box, and finally directly buries the optical cable box underground. It can be learned that a skilled person does not need to build a handhole when installing the optical cable connection box. After the optical cable connection box is installed in the optical cable box, the optical cable box can be directly buried underground. The optical cable box can protect the optical cable connection box. Therefore, an engineering period for installing the optical cable connection box is relatively short.

A person skilled in the art can easily figure out another implementation solution of the present disclosure after considering the specification and practicing the disclosure that is disclosed herein. This application is intended to cover any variations, functions, or adaptive changes of the present disclosure. These variations, functions, or adaptive changes comply with general principles of the present disclosure, and include common knowledge or a commonly used technical means in the technical field that is not disclosed in the present disclosure. The specification and the embodiments are merely considered as examples, and the actual scope and the spirit of the present disclosure are pointed out by the following claims.

It should be understood that the disclosure is not limited to the accurate structures that are described in the foregoing and that are shown in the accompanying drawings, and modifications and changes may be made without departing from the scope of the present disclosure. The scope of the present disclosure is limited only by the appended claims.

## Claims

1. An optical cable connection device, wherein the optical cable connection device comprises an optical cable box and an optical cable connection box, wherein
at least one first cable port through which a feeder cable can pass and at least one second cable port through which a drop cable can pass are provided on the optical cable box;
a first cable terminal and a second cable terminal are provided on the optical cable connection box, and the optical cable connection box is fastened and installed in the optical cable box in a detachable manner; and
the first cable terminal is configured to connect the feeder cable, or the feeder cable can pass through the first cable terminal; and the second cable terminal is configured to connect the drop cable, or the drop cable can pass through the second cable terminal.

2. The optical cable connection device according to claim 1, further comprising an installation base, wherein
the installation base is fastened in the optical cable box;
the optical cable connection box is fastened to the installation base; and
the installation base is fastened to the optical cable box in a detachable manner; or the optical cable connection box is fastened to the installation base in a detachable manner; or the installation base is fastened to the optical cable box in a detachable manner, and the optical cable connection box is fastened to the installation base in a detachable manner.

3. The optical cable connection device according to claim 2, wherein the installation base comprises at least one supporting arm, and the supporting arm is installed in the optical cable box.

4. The optical cable connection device according to claim 3, wherein the optical cable box comprises a body and a cover, a first fastening portion is disposed on each supporting arm, and a second fastening portion fitting the first fastening portion is disposed on an inner wall of the body; and
each supporting arm is installed in the body through fitting between the first fastening portion and the second fastening portion.

5. The optical cable connection device according to claim 4, wherein the first fastening portion is a protrusion, and the second fastening portion is a groove; or the first fastening portion is a groove, and the second fastening portion is a protrusion.

6. The optical cable connection device according to claim 4 or 5, wherein at least one sliding slot in which the supporting arm can slide is provided on the inner wall of the body, one end of the sliding slot is located on the top of the body, the second fastening portion is located in the sliding slot, and the supporting arm slides from one end of the sliding slot until the first fastening portion and the second fastening portion are buckled.

7. The optical cable connection device according to claim 6, wherein a base plate is disposed at the bottom of the installation base, and a tray used to support the base plate is disposed at the bottom of each sliding slot.

8. The optical cable connection device according to any one of claims 3 to 7, wherein there are two supporting arms that are disposed opposite to each other.

9. The optical cable connection device according to any one of claims 2 to 8, wherein the installation base comprises a fastening plate, and clamping portions configured to fasten the optical cable connection box are disposed on both sides of the fastening plate; and
the clamping portions clamp and fasten the optical cable connection box to the fastening plate.

10. The optical cable connection device according to claim 9, wherein a third fastening portion is disposed at the bottom of the fastening plate, and a fourth fastening portion fitting the third fastening portion is disposed at the bottom of the optical cable connection box.

11. The optical cable connection device according to claim 10, wherein the third fastening portion is a buckle, and the fourth fastening portion is a slot; or the third fastening portion is a slot, and the fourth fastening portion is a buckle.

12. The optical cable connection device according to any one of claims 1 to 11, wherein a drainage hole is provided at the bottom of the optical cable box.

13. The optical cable connection device according to any one of claims 1 to 12, wherein an opening direction of the first cable port is a tangential direction of a bottom surface of the optical cable box.
